# EUROPÄISCHE PATENTSCHRIFT

(11) **EP 1 184 218 B1**
(45) Veröffentlichungstag und Bekanntmachung des Hinweises auf die Patenterteilung: **10.01.2007**
(21) Anmeldenummer: 01114059.7
(22) Anmeldetag: 08.06.2001
(51) Int. Cl.: B60J 7/12

(54) **Versenkbare Heckscheibe, insbesondere Festglasscheibe für ein Faltverdeck in einem Kraftfahrzeug**
Retractable rear window, particularly solid glass pane for a foldable roof in a motor vehicle
Fenêtre arrière escamotable, en particulier verre solide pour un toit pliant pour véhicule motorisé

(30) Priorität: 24.08.2000 DE 10041487
(43) Veröffentlichungstag der Anmeldung: 06.03.2002
(73) Patentinhaber: Dr.Ing. h.c. F. Porsche Aktiengesellschaft, 70432 Stuttgart (DE)
(72) Erfinder: Pfertner, Kurt, 71299 Wimsheim (DE); Fröschle, Mathias, 73760 Ostfildern (DE)

(56) Entgegenhaltungen:
- EP-A- 0 246 201
- EP-A- 0 332 812
- DE-A- 4 309 607
- US-A- 4 693 509
- US-A- 4 784 428
- US-A- 5 375 901

## Beschreibung

Die Erfindung bezieht sich auf eine versenkbare Heckscheibe, insbesondere Festglasscheibe für ein Faltverdeck in einem Kraftfahrzeug nach dem Oberbegriff des Anspruchs 1.

Aus der DE 38 08 910 C2 ist ein Faltverdeck mit einer Heckscheibe aus Glas bekannt, die über seitliche Stützglieder um eine Querachse verschwenkbar ist und eine Schließstellung sowie eine Öffnungsstellung einnehmen kann, in der die Heckscheibe in einem Aufnahmefach abgelegt ist. Aus der US 4,693,509 ist eine versenkbare Heckscheibe für ein Faltverdeck in einem Kraftfahrzeug bekannt, die über Lenkhebel in eine abgesenkte und in eine aufgestellte Position verstellbar ist. Die Heckscheibe weist am unteren querverlaufenden Rand Lagerstellen auf, über die eine Verschwenkung dieser Heckscheibe möglich wird.

Aufgabe der Erfindung ist es, eine verbesserte versenkbare Heckscheibe, insbesondere eine Festglasscheibe in einem Faltverdeck zu schaffen, die in einfacher Weise von einer Verschließstellung in eine Öffnungsstellung und zurück überführbar ist, wobei in der Verschließstellung eine Dichtheit gewährleistet sein soll und die Überführung der Heckscheibe in die Öffnungsstellung durch wenige zusätzliche Bauteile erfolgt.

Diese Aufgabe wird erfindungsgemäß durch die Merkmale des Anspruchs 1 gelöst, weitere vorteilhafte Merkmale beinhalten die Unteransprüche.

Die mit der Erfindung hauptsächlich erzielten Vorteile bestehen darin, daß die Heckscheibe aus Glas in großflächiger Form, in einem Raum des Fahrzeugs in einfacher Weise ablegbar ist.

Hierzu erfolgt die Anlenkung der Heckscheibe nur durch wenige Lenkhebel und Lagerungen. Die Heckscheibe ist über einen Kniehebel, gebildet aus zwei Lenkhebeln zwangsgeführt, wobei die beiden Lenkhebel über einen Seilzug mit einem verschwenkbaren Hauptspriegel oder Hauptlenker des Faltverdecks zwangsgeführt in der Schließ- und Öffnungsstellung verbunden sind. Statt eines Seilzuges können nach einer weiteren Ausführung ein Lenker oder ähnliche Mittel verwendet werden.

Da die Öffnungsbewegung des Faltverdecks im wesentlichen über einen verschwenkbaren Hauptspriegel sowie über einen entsprechend verschwenkbaren Hauptlenker erfolgt, ist der eine Lenkhebel hierzu mit dem Seilzug verbunden, welcher aufgrund der Bewegung des Hauptspriegels oder des Hauptlenkers eine entsprechende Bewegung durchführen kann. Durch die Bewegung des Faltverdecks wird die Bewegung der Heckscheibe gesteuert, wobei die Anlenkung des Verdecks auch über andere Mittel als Hauptspriegel und Hauptlenker möglich ist.

Damit der Lenkerarm eine Bewegung in Öffnungsrichtung des Faltverdecks durchführt, ist in der aufbauseitigen Lagerung des einen Lenkhebels jeweils ein Federelement angeordnet, das den Lenkhebel bei Absenkstellung der Heckscheibe entgegen der Schwenkbewegung der Heckscheibe zu verstellen sucht. Das Federelement kann aus einer Schenkelfeder bestehen.

Eine hochgeklappte Stellung der Heckscheibe ist erforderlich, wenn ein Motor des Fahrzeugs gewartet wird. Hierzu sind die Lenkhebel über eine Bolzenachse miteinander schwenkbar verbunden und der aufbauseitig angelenkte erste Lenkhebel weist eine Stiftarretierung zum weiteren zweiten Lenkhebel auf, wobei diese Stiftarretierung aus einem am ersten Lenkhebel vorgesehenen Arretierungshebel besteht, der mit einem herausziehbaren Stift derart in Eingriff steht, daß bei gezogenem Stift eine Wartungsstellung und bei eingestecktem Stift eine Schließ- und Öffnungsstellung der Heckscheibe einstellbar ist.

Die Verbindung der Lenkhebel ist in einfacher Bauweise derart vorgesehen, daß der obere Lenkhebel z.B. an einem Schenkel des Scheibenrahmens über einen Lagerbolzen und der untere Lenkerbolzen über einen weiteren Lagerbolzen am Spannspriegel angelenkt wird.

Damit die Heckscheibe in der Verschließstellung abgedichtet im Faltverdeck sowie im Fahrzeugaufbau anzuordnen ist, die Heckscheibe mit ihrem oberen querverlaufenden Rand an einem Eckspriegel in der Schließstellung dichtend angelegt, wobei die seitlichen Ränder der Heckscheibe im oberen Bereich eine anliegende Verbindung am Stoff des Faltverdecks aufweisen und im unteren Bereich des Rahmens fest mit dem Stoff des Faltverdecks verbunden sind.

Durch diese anliegende Verbindung der Heckscheibe bzw. eines Rahmens der Scheibe am Faltverdeck wird in vorteilhafter Weise erreicht, daß die Heckscheibe sich bei der Öffnungsbewegung des Faltverdecks von diesem lösen kann, um eine Behinderung beim Schwenken der Heckscheibe um seine horizontale Schwenkachse zu vermeiden.

Damit eine optimale Dichtheit zwischen dem Karosserieelement bzw. Verdeckkastendeckel einerseits und dem Spannspriegel andererseits erfolgt, ist zwischen dem Karosserieelement bzw. dem Verdeckkastendeckel des Fahrzeugaufbaus und einem am Aufbau angelenkten querverlaufenden Spannspriegel der Scheibenrahmen angeordnet, welcher stirnseitig an einer Dichtung des Spannspriegels anliegt, wobei ein querverlaufender Rand des Verdeckkastendeckels unterseitig mit der Dichtung in Verbindung steht.

Der Spannspriegel selbst ist über Hebel verschwenkbar am Fahrzeugaufbau gehalten, wobei der Spannspriegel aufbauseitig über seitlich am Fahrzeugaufbau vorgesehene Lagerungen über Hebel verschwenkbar angelenkt ist und am Spannspriegel die Lagerungen zur Bildung der horizontalen Schwenkachse für die Festglasscheibe vorgesehen werden.

Die Heckscheibe kann statt der Kniehebel an beiden Seiten auch einen andersartig aufgebauten Hebel aufweisen und die Lagerungen am Spannspriegel können beispielsweise auch am hinteren Rand der Heckscheibe und nicht seitlich vorgesehen sein. Eine motorische Verstellung der Heckscheibe, bei Wegfall der Lenkhebel ist auch denkbar, wobei die Motoren beispielsweise dann die untere querverlaufende Schwenkachse bilden. Desweiteren kann der Spannspriegel auch nur seitlich der Heckscheibe vorgesehen sein.

Ein Ausführungsbeispiel der Erfindung ist in den Zeichnungen dargestellt und wird im folgenden näher beschrieben.
Es zeigen:
- Fig. 1: eine schaubildliche Darstellung auf eine Heckscheibe ohne Faltverdeck in geschlossener Stellung des Verdecks mit Eckspriegel, Hauptspriegel und Hauptlenker des Faltverdecks und Lenkerarmen und horizontaler Schwenkachse der Heckscheibe,
- Fig. 2: eine schematische Darstellung des geschlossenen Faltverdecks mit Heckscheibe, Lenkhebeln und Seilzug,
- Fig. 3: eine schematische Darstellung des geöffneten Faltverdecks mit abgelegter Heckscheibe,
- Fig. 4: eine schematische Darstellung über die möglichen Stellungen der Heckglasscheibe im Fahrzeug,
- Fig. 5: eine Seitenansicht der Lenkhebel mit Arretiereinrichtung,

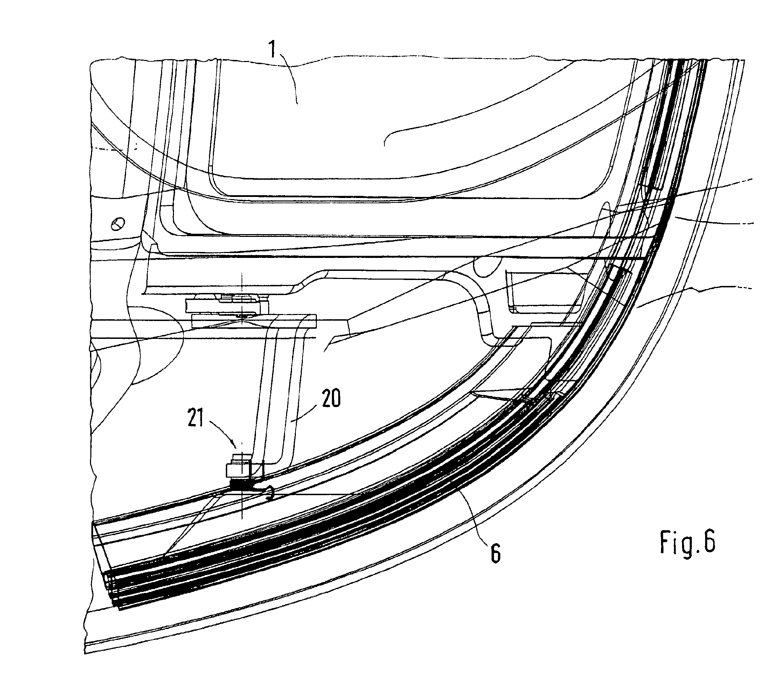

- Fig. 6: eine Draufsicht auf einen Spannspriegel mit Anlenkung am Fahrzeugaufbau,

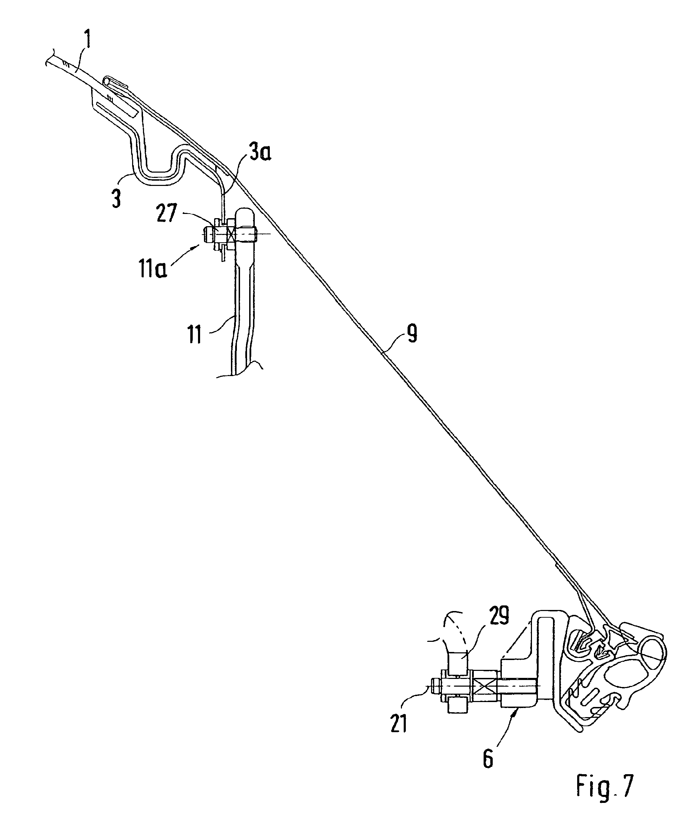

- Fig. 7: eine Vorderansicht auf die Lagerung der Lenkhebel sowie die Anlenkung des Spannspriegels mit Lenker,
- Fig. 8: einen Schnitt durch den oberen Rand bzw. Rahmen mit Heckscheibe nach der Linie VIII-VIII der Fig. 1,
- Fig. 9: einen Schnitt durch den unteren Rand bzw. Rahmen mit Heckscheibe nach der Linie IX-IX der Fig. 1,
- Fig. 10: einen Schnitt durch den unteren seitlichen Rand bzw. Rahmen mit Heckscheibe nach der Linie X-X der Fig. 1,
- Fig. 11: einen Schnitt durch den oberen seitlichen Rand bzw. Rahmen mit Heckscheibe nach der Linie XI-XI der Fig. 1,
- Fig. 12: eine vergrößerte Darstellung des unteren Lenkerarmes mit Federelement und
- Fig. 13: einen Schnitt nach der Linie XIII-XIII der Fig. 5 durch ein Arretierelement.

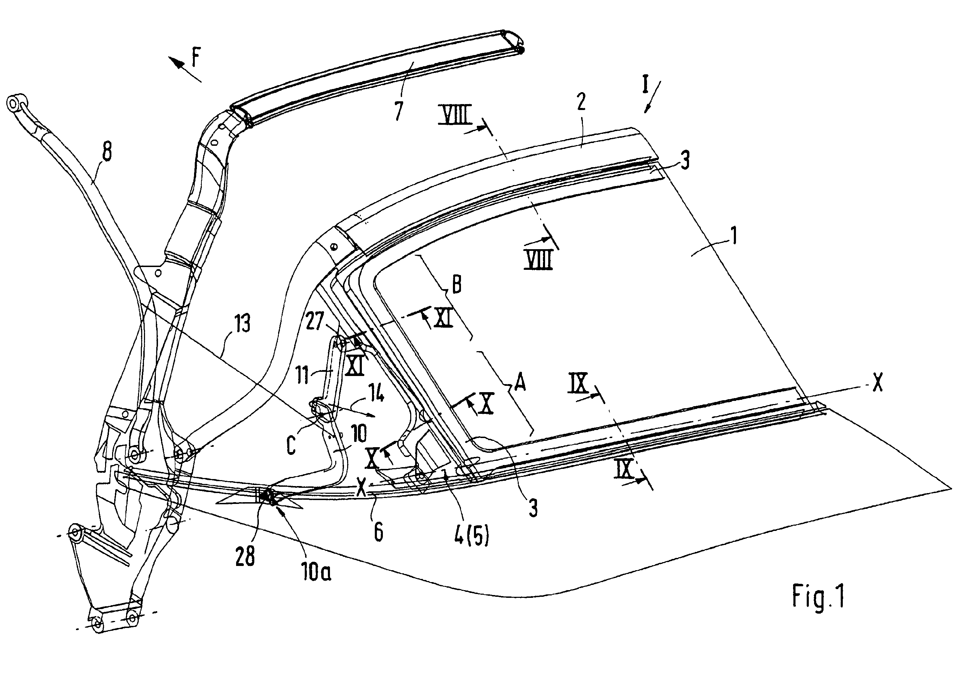

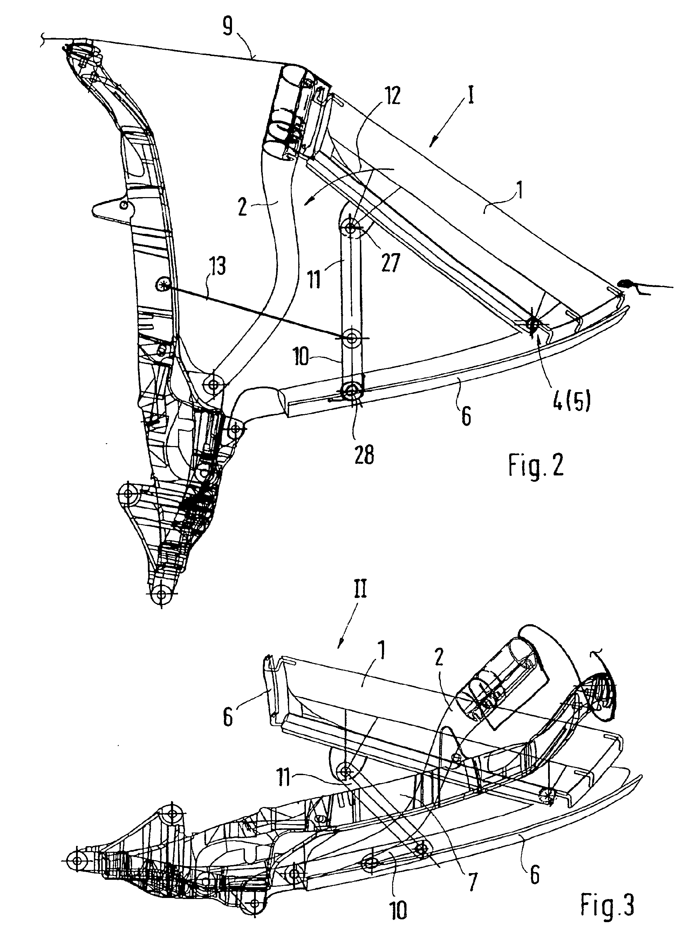

In Fig. 1 ist ein Fahrzeug mit einer Heckscheibe 1 gezeigt, die in einem Faltverdeck 9 angeordnet ist, wobei das Faltverdeck 9 in Fig. 2 näher dargestellt ist und mit einem Eckspriegel 2 verbunden wird und an einem Hauptspriegel 7 abgestützt ist und teilweise mit diesem verbunden wird. Desweiteren ist ein verschwenkbarer Hauptlenker 8 zum Verstellen des Faltverdecks vorgesehen.

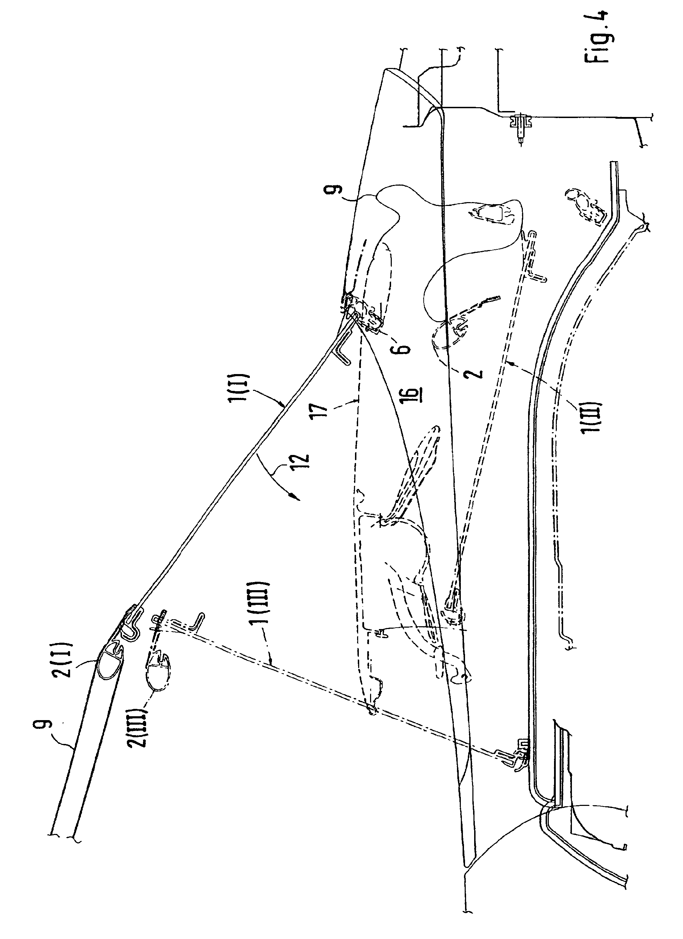

Die Ausbildung und Befestigung und Ansteuerung des Faltverdecks 9 für die Heckscheibe 1 kann auch in einer anderen Weise vorgenommen werden. Wesentlich für die Erfindung ist, daß die Heckscheibe 1 als Festglasscheibe beispielsweise in einem Rahmen 3 angeordnet sein kann oder randseitig ohne Rahmen 3 über seitliche Lagerungen 4, 5 am Fahrzeugaufbau, beispielsweise an einem Spannspriegel 6 gelagert ist. Über Lenkhebel 10, 11 an jeder Seite der Heckscheibe 1 erfolgt eine zwangsgeführte Verschwenkbewegung der Heckscheibe 1. Die möglichen Stellungen I, II und III der Heckscheibe 1 sind in Fig. 4 schematisch dargestellt.

Die Heckscheibe kann auch z.B. umspritzt sein, und die Drehpunkte können z.B. auch direkt an die Scheibe ohne Rahmen geschraubt, geklebt o.ä. befestigt bzw. angeordnet sein.

So kann die Heckscheibe 1 eine geschlossene Stellung I, d.h. das Faltverdeck 9 ist geschlossen, eine geöffnete Stellung II und eine Wartungsstellung III einnehmen.

Die Heckscheibe 1 ist zwischen dem Spannspriegel 6 und dem Eckspriegel 2 angeordnet und über die Lager 4, 5 am Spannspriegel 6 um eine horizontale Achse X-X verschwenkbar. Die Verschwenkbewegung beim Ablegen von der geschlossenen Stellung I in die Öffnungsstellung II (Fig. 3) erfolgt in Pfeilrichtung 12 bzw. in Fahrtrichtung F.

Zur Durchführung dieser Öffnungsbewegung sind beispielsweise am Rahmen 3 der Heckscheibe 1 die Lenkhebel 10, 11 vorgesehen, wobei der Lenkhebel 11 am Scheibenrahmen 3 in einem Lager 11a und der weitere Lenkhebel 10 am Spannspriegel 6 in einem Lager 10a schwenkbar angelenkt ist.

Der untere Lenkhebel 10 ist über ein Seil 13 oder einem ähnlichen Übertragungsmittel entweder mit dem Hauptspriegel 7 oder dem Hauptlenker 8 verbunden. Durch diese Verbindung mit dem Seil 13 kann sich das Lenkhebelpaar 10, 11 beim Öffnen des Faltverdecks 9 in Pfeilrichtung verschwenken und die Ablegebewegung der Heckscheibe 1 einleiten. Damit das Lenkhebelpaar 10, 11 diese Bewegung selbsttätig durchführen kann, ist in der Lagerung 10a des unteren Lenkhebels 10 ein Federelement 15 beispielsweise eine Schenkelfeder angeordnet, die das Lenkhebelpaar 10, 11 zu verschwenken sucht, wenn der Hauptspriegel 7 bzw. der Hauptlenker 8 sich in eine Öffungsbewegung entgegen der Fahrtrichtung F verschwenkt.

Wie in Fig. 3 näher dargestellt ist, wird die Heckscheibe 1 in einem Aufnahmeraum 16 des Fahrzeugs abgelegt und von dem Verdeckkastendeckel 17 verschlossen. Die Einnahme der Stellungen der Heckscheibe 1 sind abhängig vom Bewegungsablauf des Faltverdecks 9, so daß beim Schließen des Faltverdecks 9 die Heckscheibe 1 wieder aufgerichtet wird, wie Fig. 2 näher zeigt. Das heißt, der Seilzug 13 wird gezogen und nimmt die Lenkhebel 10, 11 wieder mit und die Heckscheibe 1 wird in seine Dichtungen gezogen.

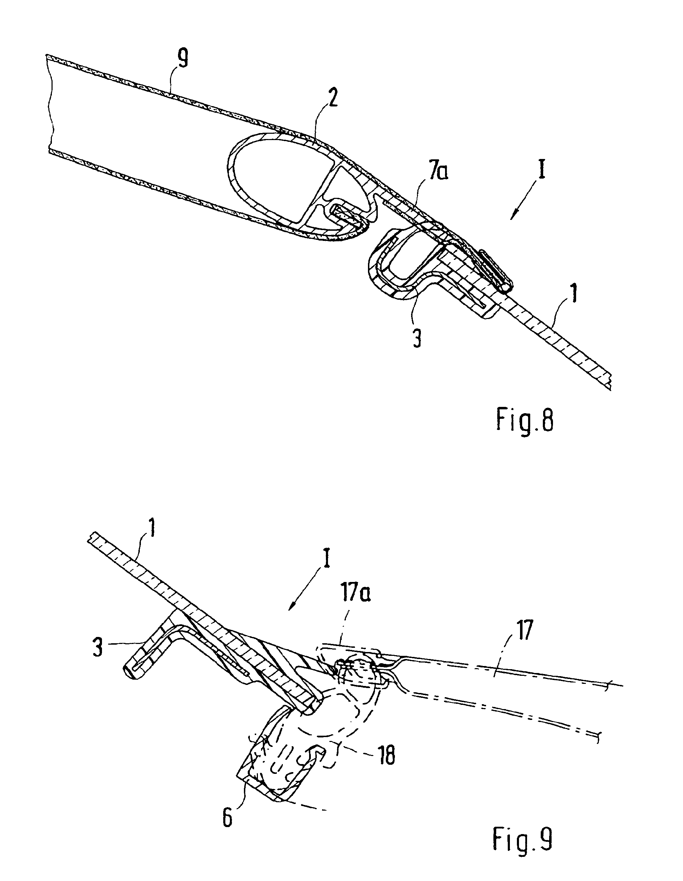

In den Fig. 8 bis 11 ist die Heckscheibe 1 in geschlossener Stellung des Faltverdecks 9 im Querschnitt gem. Fig. 1 dargestellt.

Fig. 8 zeigt einen Querschnitt durch den oberen querverlaufenden Rahmen 3 der Heckscheibe 1 und dem Hauptspriegel 7. Der Rahmen 3 legt sich fest und dicht an den starren Schenkel 7a des Hauptspriegels 7 an. Beim Öffnen des Faltverdecks 1 kommt der Schenkel 7a vom Rahmen 3 wieder frei.

In Fig. 9 ist ein Querschnitt des unteren querverlaufenden Rahmens 3 dargestellt, der zwischen dem Deckel 17 und dem Spannspriegel 6 angeordnet und über eine Dichtung 18 unmittelbar am Deckel bzw. am Spriegel abgedichtet gehalten wird. Beim Öffnen des Faltverdecks 9 kommt der Rahmen 3 von dieser Dichtung 18 wieder frei.

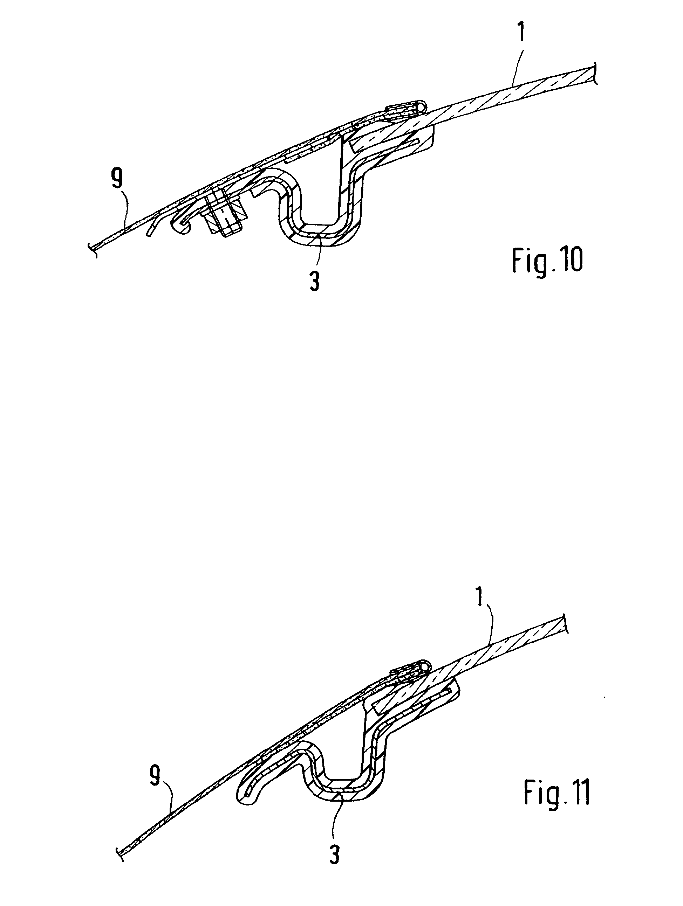

In Fig. 10 ist ein Querschnitt durch einen seitlichen Bereich des Rahmens 3 und zwar im unteren Abschnitt A dargestellt. In diesem Abschnitt A ist der Stoff des Faltverdecks 9 fest mit dem Rahmen 3 verbunden und somit auch die Heckscheibe 1.

In Fig. 11 ist ein Querschnitt durch einen weiteren seitlichen Bereich des Rahmens 3 und zwar im oberen Abschnitt B dargestellt. In diesem Abschnitt B ist der Stoff des Faltverdecks 9 nicht mit dem Rahmen 3 verbunden, so daß bei einer Öffnungsbewegung des Faltverdecks 9 und somit ein Verschwenken der Heckscheibe 1, diese sich von Faltverdeck 9 löst und freikommt.

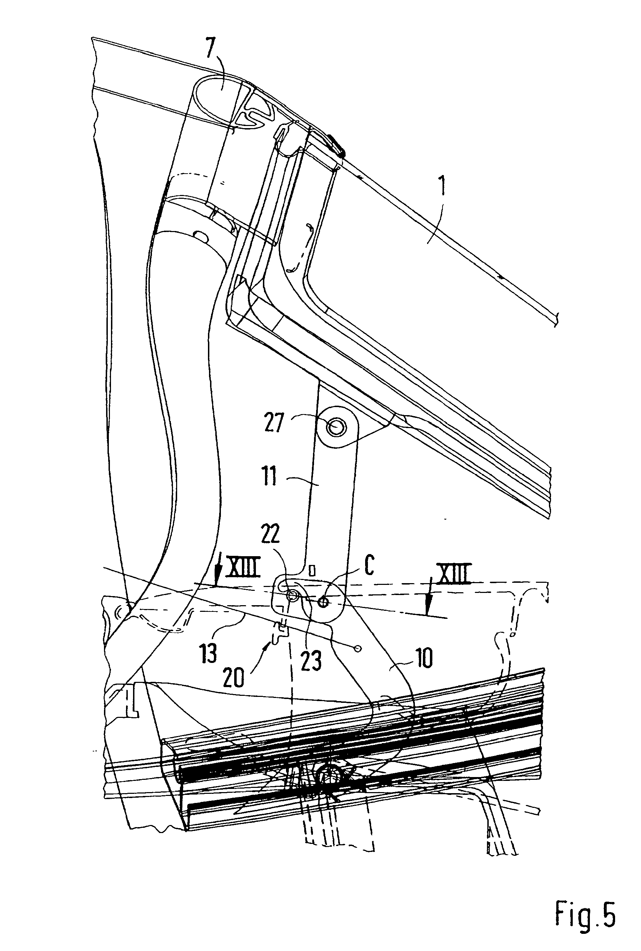

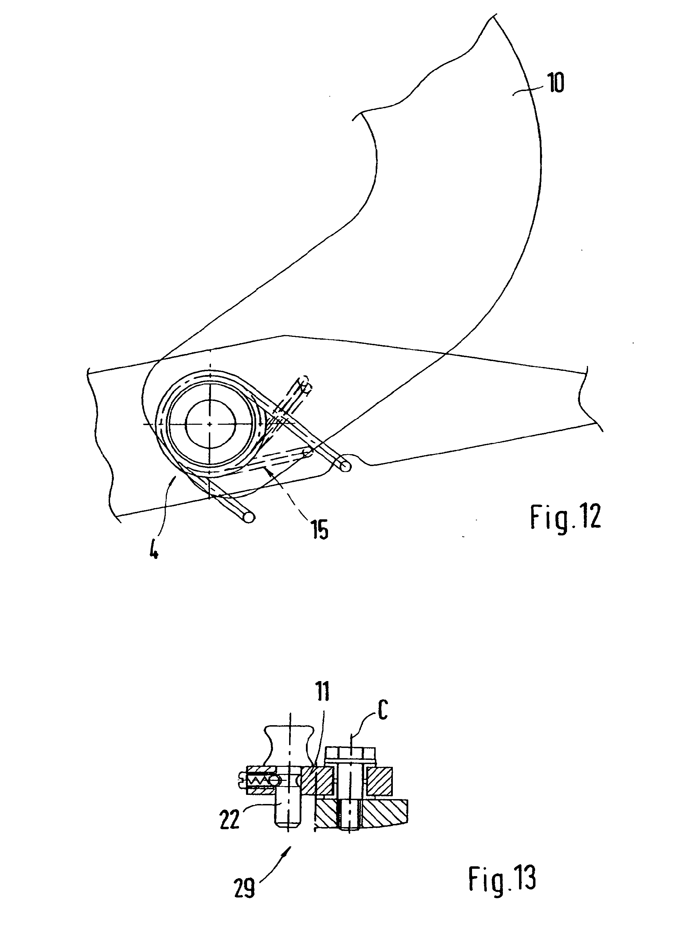

In Fig. 5 ist in Verbindung mit Fig. 13 eine Arretiereinrichtung 20 zwischen den beiden Lenkhebeln 10, 11 dargestellt. Diese Einrichtung 20 hat die Aufgabe, das Verschwenken der Heckscheibe 1 in eine Wartungsstellung III gem. Fig. 4 zu ermöglichen. Bei der Wartungsstellung III wird die Heckscheibe 1 um die Lager 4, 5 mitsamt des Spannspriegels 6 in Fahrtrichtung F verschwenkt, derart, daß ein Motorraum zugänglich ist.

Die Arretiereinrichtung 20 umfaßt im wesentlichen einen Stift 22 im oberen Lenkhebel 11, der einen Arretierhebel 23 untergreift und der zur Wartungsstellung III entfernt wird und ein Zurückschwenken der Heckscheibe 1 ohne Behinderung der Lenkhebel 10, 11, in Fahrtrichtung F zuläßt.

## Patentansprüche

1. Versenkbare Heckscheibe (1), insbesondere Festglasscheibe für ein Faltverdeck in einem Kraftfahrzeug, wobei die Heckscheibe (1) über Schwenkhebel angelenkt und von einer geschlossenen Verdeckstellung (I) in eine abgesenkte Verdeckstellung(II) überführbar ist und die Heckscheibe (1) aufbauseitig um mindestens eine horizontale Lagerachse (X-X) verschwenkbar ist, die am unteren querverlaufenden Rand der Heckscheibe (1) über Lagerstellen (4, 5) gebildet wird und zwischen den seitlichen Rändern der Heckscheibe (1) und dem Fahrzeugaufbau an jeder Seite mindestens ein Lenkhebel (10, 11) zur abstützenden Führung der Heckscheibe (1) in die einzelnen Stellungen (I, II, III) vorgesehen ist und die Festglasscheibe (1) mit ihrem hinteren querverlaufenden Rand ein Karosserieelement (17) untergreift und Dichtungen (18) zwischen diesem Karosserieelement (17) und dem Rand zum Abdichten in der geschlossenen Verdeckstellung (I) vorgesehen sind, wobei der Rand der Heckscheibe (1) als Rahmen (3) ausgeführt ist **dadurch gekennzeichnet, dass** die Lenkhebel (10, 11) einen Kniehebel bilden und einer der Lenkhebel (10) über einen Betätigungselement (13) mit einem verschwenkbaren Hauptspriegel (7) oder einem Hauptlenker (8) des Faltverdecks (9) zwangsgeführt in der Schließ- und Öffnungsstellung (I, II) verbunden ist.

2. Versenkbare Heckscheibe nach Anspruch 1, **dadurch gekennzeichnet, dass** in der aufbauseitigen Lagerung (4) des einen Lenkhebels (10) jeweils ein Federelement (15) angeordnet ist, das den Lenkhebel (10) bei Absenkstellung der Heckscheibe (1) entgegen der Schwenkbewegung der Heckscheibe (1) zu verstellen sucht.

3. Versenkbare Heckscheibe nach Anspruch 2, **dadurch gekennzeichnet, dass** das Federelement (15) aus einer Schenkelfeder besteht.

4. Versenkbare Heckscheibe nach einem oder mehreren der vorhergehenden Ansprüche, **dadurch gekennzeichnet, dass** die Lenkhebel (10, 11) über eine Bolzenachse (C) miteinander schwenkbar verbunden sind und der aufbauseitig angelenkte erste Lenkhebel (10) eine Stiftarretierung (20) zum weiteren zweiten Lenkhebel (11) aufweist.

5. Versenkbare Heckscheibe nach den Ansprüchen 1 oder 4, **dadurch gekennzeichnet, dass** die Stiftarretierung (20) aus einem am ersten Lenkhebel (10) vorgesehenen Arretierungshebel (23) besteht, der mit einem herausziehbaren Stift (22) derart in Eingriff steht, dass bei gezogenem Stift (22) eine Wartungsstellung (III) und bei eingestecktem Stift (22) eine Schließ- und Öffnungsstellung (I, II) der Heckscheibe (1) einstellbar ist.

6. Versenkbare Heckscheibe nach einem oder mehreren der vorhergehenden Ansprüche, **dadurch gekennzeichnet, dass** der obere Lenkhebel (11) an einem Schenkel (3a) des Scheibenrahmens (3) über einen Lagerbolzen (27) und der untere Lenkerarm (10) über einen Lagerbolzen (28) an einem Spannspriegel (6) angelenkt ist.

7. Versenkbare Heckscheibe nach einem oder mehreren der vorhergehenden Ansprüche, **dadurch gekennzeichnet, dass** die Heckscheibe (1) mit ihrem oberen querverlaufenden Rand an einem Schenkel (7a) eines Eckspriegels (2) in der Schließstellung (I) dichtend anliegt und die seitlichen Ränder (3) der Heckscheibe (1) im oberen Abschnitt (B) eine anliegende Verbindung am Stoff des Faltverdecks (9) aufweisen, wobei im unteren Abschnitt (A) die Heckscheibe mit dem Stoff des Faltverdecks (9) fest verbunden ist.

8. Versenkbare Heckscheibe nach einem oder mehreren der vorhergehenden Ansprüche, **dadurch gekennzeichnet, dass** zwischen dem Karosserieelement (Verdeckkastendeckel) (17) des Fahrzeugaufbaus und den am Aufbau angelenkten querverlaufenden Spannspriegel (6) der Scheibenrahmen (3) angeordnet ist, welcher stirnseitig an einer Dichtung (18) des Spannspriegels (6) anliegt, wobei ein querverlaufender Rand (17a) des Verdeckkastendeckels (17) unterseitig mit der Dichtung (18) in Verbindung steht.

9. Versenkbare Heckscheibe nach einem oder mehreren der vorhergehenden Ansprüche, **dadurch gekennzeichnet, dass** der Spannspriegel (6) aufbauseitig über seitlich am Fahrzeugaufbau vorgesehene Lagerungen (21) über Hebel (29) verschwenkbar angelenkt ist, wobei am Spannspriegel (6) die Lagerungen (4, 5) zur Bildung der horizontalen Schwenkachse (X-X) für die Festglasscheibe (1) vorgesehen sind.

## Claims

1. A retractable rear window (1), especially a solid glass pane for a folding roof in a motor vehicle, wherein the rear window (1) is articulated via pivoted levers and is movable from a closed roof position (I) into a lowered roof position (II), and the rear window (1) is pivotable on the vehicle body about at least one horizontal bearing axis (X-X) which is formed on the lower transversely extending edge of the rear window (1) by mounting points (4, 5), and at least one control lever (10, 11) for supporting and guiding the rear window (1) into the individual positions (I, II, III) is provided on each side between the lateral edges of the rear window (1) and the vehicle body, and the rear transversely extending edge of the solid glass pane (1) engages below a bodywork member (17), and seals (18) are provided between this bodywork member (17) and the edge in order to provide a seal in the closed roof position (I), wherein the edge of the rear window (1) is constructed as a frame (3), **characterised in that** the control levers (10, 11) form a toggle lever, and one of the control levers (10, 11) is connected by an actuating member (13) to a pivotable main bow (7) or a main rod (8) of the folding roof (9) so as to be positively controlled in the closed and open position (I, II).

2. A retractable rear window according to claim 1, **characterised in that** a respective spring member (15) is arranged in the mounting (4) of the one control lever (10) on the body and, in the lowered position of the rear window (1), tries to displace the control lever (10) counter to the pivoting movement of the rear window (1).

3. A retractable rear window according to claim 2, **characterised in that** the spring member (15) comprises a leg spring.

4. A retractable rear window according to one or more of the preceding claims, **characterised in that** the control levers (10, 11) are pivotably connected to one another via a bolt axis (C), and the first control lever (10) articulated on the body has a pin detent (20) for the further, second control lever (11).

5. A retractable rear window according to claim 1 or claim 4, **characterised in that** the pin detent (20) comprises a detent lever (23) which is provided on the first control lever (10) and engages with an extractable pin (22) in such a way that a maintenance position (III) is attainable when the pin (22) is withdrawn and a closed and open position (I, II) of the rear window (1) is attainable when the pin (22) is inserted.

6. A retractable rear window according to one or more of the preceding claims, **characterised in that** the upper control lever (11) is articulated on a limb (3a) of the window frame (3) by a bearing bolt (27), and the lower control arm (10) is articulated on a tensioning bow (6) by a bearing bolt (28).

7. A retractable rear window according to one or more of the preceding claims, **characterised in that** the upper transversely extending edge of the rear window (1) rests in a sealed manner against a limb (7a) of a corner bow (2) in the closed position (I), and the lateral edges (3) of the rear window (1) rest against the fabric of the folding roof (9) in the upper portion (B), while the rear window is fixedly connected to the fabric of the folding roof (9) in the lower portion (A).

8. A retractable rear window according to one or more of the preceding claims, **characterised in that** the window frame (3) is arranged between the bodywork member (folding-roof compartment cover) (17) of the vehicle body and the transversely extending tensioning bow (6) articulated on the body and rests at its end against a seal (18) of the tensioning bow (6), wherein the underside of a transversely extending edge (17a) of the folding-roof compartment cover (17) is connected to the seal (18).

9. A retractable rear window according to one or more of the preceding claims, **characterised in that** the tensioning bow (6) is pivotably articulated on the body by means of levers (29) via mountings (21) which are provided laterally on the vehicle body, wherein the mountings (4, 5) are provided on the tensioning bow (6) for forming the horizontal pivoting axis (X-X) for the solid glass pane (1).

## Revendications

1. Lunette arrière (1) escamotable, notamment lunette en vitre rigide pour une capote pliante dans un véhicule automobile, la lunette arrière (1) étant articulée par l'intermédiaire de leviers de commande et pouvant être amenée d'une position fermée de la capote (I) dans une position abaissée de la capote (II), et la lunette arrière (1) pouvant pivoter côté structure autour d'au moins un axe de palier horizontal (X-X) qui est formé sur le bord transversal inférieur de la lunette arrière (1) par l'intermédiaire de zones de paliers (4, 5) et entre les bords latéraux de la lunette arrière (1) et la structure du véhicule, au moins un levier de commande (10, 11) étant prévu de chaque côté, pour le guidage soutenu de la lunette arrière (1) dans les positions individuelles (I, II, III) et la lunette en vitre rigide (1) s'engageant par son bord transversal arrière dans un élément de carrosserie (17) et des éléments d'étanchéité (18) étant prévus entre ledit élément de carrosserie (17) et le bord, pour assurer l'étanchéité dans la position de fermeture de la capote (I), le bord de la lunette arrière (1) étant réalisé sous la forme de cadre (3), **caractérisée en ce que** les leviers de commande (10, 11) forment une genouillère et **en ce que** l'un des leviers de commande (10) est relié par guidage forcé dans la position de fermeture et d'ouverture (I, II), par l'intermédiaire d'un élément d'actionnement (13) avec un arceau principal pivotant (7) ou avec un bras oscillant principal (8) de la capote pliante (9).

2. Lunette arrière escamotable selon la revendication 1, **caractérisée en ce que** dans le logement (4) côté structure de l'un des leviers de commande (10) est disposé respectivement un élément à ressort (15) qui amène le levier de commande (10) à l'encontre du mouvement pivotant de la lunette arrière (1) en position d'abaissement de la lunette arrière (1).

3. Lunette arrière escamotable selon la revendication 2, **caractérisée en ce que** l'élément à ressort (15) consiste en un ressort à branches.

4. Lunette escamotable selon l'une quelconque ou plusieurs des revendications précédentes, **caractérisée en ce que** les leviers de commande (10, 11) sont reliés l'un avec l'autre de façon pivotante par l'intermédiaire d'un axe (C) et **en ce que** le premier levier de commande (10) articulé côté structure comporte un blocage par goujon (20) vers le deuxième levier de commande (11).

5. Lunette arrière escamotable selon les revendications 1 ou 4, **caractérisée en ce que** le blocage par goujon (20) consiste en un premier levier de blocage (23) prévu sur le premier levier de commande (10) qui s'engage dans un goujon extractible (22) de façon telle, que lorsque le goujon (22) est sorti, on peut régler une position de maintenance (III) et lorsque le goujon (22) est rentré, on peut régler une position de fermeture et d'ouverture (I, II) de la lunette arrière (1).

6. Lunette arrière escamotable selon l'une quelconque ou plusieurs des revendications précédentes, **caractérisée en ce que** le levier de commande supérieur (11) est articulé sur une branche (3a) du cadre de la vitre (3), par l'intermédiaire d'un axe de palier (27) et **en ce que** le levier de commande inférieur (10) est articulé par l'intermédiaire d'un axe de palier (28) sur un arceau de tension (6).

7. Lunette arrière escamotable selon l'une quelconque ou plusieurs des revendications précédentes, **caractérisé en ce que**, par son bord supérieur transversal, la lunette arrière (1) s'appuie de façon étanche sur une branche (7a) de l'arceau angulaire (2), dans la position de fermeture (I) et **en ce que** les bords latéraux (3) de la lunette arrière (1) comportent sur le section supérieure (B) une liaison adjacente sur le tissu de la capote pliante (9), la lunette arrière étant fixement reliée avec le tissu de la capote pliante (9) dans la section inférieure (A).

8. Lunette arrière escamotable selon l'une quelconque ou plusieurs des revendications précédentes, **caractérisée en ce que** le cadre de la lunette (3), qui côté frontal s'appuie sur un élément d'étanchéité (18) de l'arceau de tension (6) est disposé entre l'élément de carrosserie (couvercle du caisson de capote) (17) de la structure de véhicule et l'arceau de tension (6) transversal, articulé sur la structure, un bord transversal (17a) du couvercle de caisson de capote (17) étant en liaison côté inférieur avec l'élément d'étanchéité (18).

9. Lunette arrière escamotable selon l'une quelconque ou plusieurs des revendications précédentes, **caractérisée en ce que** l'arceau de tension (6) est articulé côté structure de façon pivotante via des leviers (29) par l'intermédiaire de paliers (21) prévus latéralement sur la structure de véhicule, les paliers (4, 5) pour la création de l'axe de pivotement horizontal (X-X) pour la vitre en verre rigide (1) étant prévus sur l'arceau de tension (6).
